# EUROPÄISCHE PATENTSCHRIFT

(11) **EP 0 854 833 B1**
(45) Veröffentlichungstag und Bekanntmachung des Hinweises auf die Patenterteilung: **12.06.2002**
(21) Anmeldenummer: 97941925.6
(22) Anmeldetag: 08.08.1997
(51) Int. Cl.: B65H 5/34, B65H 29/60

(54) **VORRICHTUNG ZUM ÄNDERN DER BEWEGUNGSRICHTUNG VON FLACHEM, RECHTECKIGEN BLATTGUT**
DEVICE FOR CHANGING THE MOVING DIRECTION OF A FLAT RECTANGULAR SHEETLIKE PRODUCT
DISPOSITIF POUR MODIFIER LE SENS DE MOUVEMENT D'UN PRODUIT SE PRESENTANT SOUS FORME DE FEUILLE RECTANGULAIRE PLATE

(30) Priorität: 09.08.1996 DE 19632224
(43) Veröffentlichungstag der Anmeldung: 29.07.1998
(73) Patentinhaber: Giesecke & Devrient GmbH, 81677 München (DE)
(72) Erfinder: BIELEFELD, Detlef, D-80638 München (DE); MYLAEUS, Ulrich, D-81245 München (DE); KISTNER, Bernhard, D-82343 Pöcking (DE); HELL, Wilhelm, D-86415 Mering (DE)
(74) Vertreter: Klunker . Schmitt-Nilson . Hirsch
(86) Internationale Anmeldenummer: EP9704336
(87) Internationale Veröffentlichungsnummer: WO9806651

(56) Entgegenhaltungen:
- EP-A- 0 244 650
- EP-A- 0 444 507
- US-A- 3 703 951
- US-A- 4 431 104
- US-A- 5 074 544
- US-A- 5 333 851
- Patent Abstracts of Japan, Band 7, Nr 197(M-239); & JP,A,5895064 (NIPPON DENKI K.K.), 1983-06-06

## Beschreibung

Die Erfindung betrifft eine Vorrichtung zum Ändern der Bewegungsrichtung von flachem, rechteckigen Blattgut, wie z.B. Belege oder Banknoten gemäß dem Oberbegriff des Anspruchs 1.

Derartige Vorrichtungen weisen im allgemeinen eine erste Transportstrecke zum Antransport des Blattguts auf. In dieser ersten Transportstrecke werden die Blätter einzeln mit jeweils einem Abstand zwischen zwei Blättern transportiert. Weiterhin weisen derartige Vorrichtungen eine zweite Transportstrecke zum Weitertransport des Blattguts auf, die rechtwinklig zur ersten Transportstrecke angeordnet ist. Zum Abzug eines Blattes aus der ersten Transportstrecke in die zweite Transportstrecke ist eine Abzugseinrichtung vorgesehen, mittels der das Blattgut ohne Lageänderung in einem Abzugsbereich abgezogen wird.

Derartige Vorrichtungen sind beispielsweise aus der DE-A- 42 43 986, der EP-A- 0 622 316 und der EP-A- 0 505 340 bekannt. In den dort beschriebenen Abzugseinrichtungen wird das Blattgut zunächst von einem Abzugskörper und einer entsprechenden Gegenrolle erfaßt und aus der ersten Transportstrecke abgezogen. Danach wird das Blattgut in die zweite Transportstrecke übergeben.

Aus der US 3,703,951 ist eine weitere Vorrichtung bekannt, die mittels Abzugskörper eine Änderung der Bewegungsrichtung von Blattgut bewirkt. Zusätzlich verfügt die bekannte Vorrichtung über eine Weiche, welche es erlaubt, das Blattgut entweder einer oberen oder einer unteren Teilstrecke zuzuführen, um das Blattgut jeweils in den Bereich mindestens eines Abzugskörpers zu transportieren.

Nachteilig bei diesen Vorrichtungen ist es, daß die hier eingesetzten Abzugskörper durch das Bremsen des Blattguts in der ersten Transportstrecke und das Beschleunigen des Blattguts senkrecht zur Transportrichtung der ersten Transportstrecke einem hohen Verschleiß ausgesetzt sind, sodaß die Abzugskörper häufig ausgewechselt werden müssen. Weiterhin stellt die Übergabe des Blattguts durch den Abzugskörper in die zweite Transportstrecke eine potentielle Störungsquelle dar, da es insbesondere bei der Übergabe von Blattgut geringerer Qualität häufig zu Stauungen im Einlauf zur zweiten Transportstrecke kommen kann.

Die Aufgabe der Erfindung besteht nun darin, eine Vorrichtung zum Ändern der Bewegungsrichtung von flachem, rechteckigen Blattgut vorzuschlagen, die trotz Verschleiß mit hoher Standzeit arbeitet und das Blattgut auch bei hohen Transportgeschwindigkeiten sicher von einem Transportsystem in das andere übergibt.

Die Aufgabe wird durch die im kennzeichnenden Teil des Hauptanspruchs angegebenen Merkmale gelöst.

Das Wesentliche der Erfindung besteht darin, daß die Abzugseinrichtung das Blattgut direkt mittels des Transportmediums der zweiten Transportstrecke abzieht. Da die Länge des Transportmediums der zweiten Transportstrecke im allgemeinen wesentlich länger ist als der Umfang des Abzugskörpers der bekannten Vorrichtungen, wird der Verschleiß, der beim Bremsen und beim Beschleunigen des Blattguts entsteht, wesentlich besser verteilt. Ein Austausch des Transportmediums aufgrund des Verschleißes ist somit wesentlich seltener notwendig, als ein entsprechender Austausch der Abzugskörper bei den bekannten Vorrichtungen. Weiterhin wird das Blattgut direkt vom Transportmedium der zweiten Transportstrecke fest gefaßt und kann ohne weitere Übergabestelle sicher transportiert werden, so daß sich die Problematik der Übergabe in die zweite Transportstrecke gemäß den bekannten Vorrichtungen nicht stellt.

In einer bevorzugten Ausführungsform der Vorrichtung werden die Transportmedien der zweiten Transportstrecke jeweils um ein Abzugsrad umgelenkt. Die Abzugsräder sind an Hebeln angeordnet, die um einen Drehpunkt drehbar sind. Mittels eines Stellgliedes können die Hebel aus einer Ruheposition in eine Abzugsposition bewegt werden.

Um die auf die Hebel wirkenden Drehmomente gering zu halten, wird der Drehpunkt jeweils auf dem Schnittpunkt der Winkelhalbierenden zwischen Lasttrum und Leertrum des Transportmediums der zweiten Transportstrekke in der Ruheposition und der Winkelhalbierenden zwischen Lasttrum und Leertrum des Transportmediums der zweiten Transportstrecke in der Abzugsposition gewählt.

Weiterhin kann die erste Transportstrecke in zwei Teilstrecken aufgeteilt werden, in die das Blattgut mittels einer Weiche entsprechend gelenkt werden kann. In diesen Teilstrecken befindet sich jeweils mindestens eineAbzugseinrichtung. Das abgezogene Blattgut wird dann in entsprechenden Teilstrecken der zweiten Transportstrecke weitertransportiert. Durch eine geeignete Anordnung der Teilstrecken kann z.B. der Durchsatz der Vorrichtung erhöht werden. Alternativ dazu kann das Blattgut um eine oder zwei Achsen gewendet werden.

Weitere Vorteile und Weiterbildungen der Erfindung ergeben sich aus den Unteransprüchen sowie der Beschreibung der Ausführungsbeispiele anhand der Figuren.

Darin zeigen:
- Fig. 1: Prinzipskizze einer Seitenansicht der bevorzugten Ausführungsform,
- Fig. 2: Prinzipskizze einer Aufsicht der bevorzugten Ausführungsform,
- Fig. 3: Prinzipskizze des Funktionsablaufes der bevorzugten Ausführungsform,
- Fig. 4: Prinzipskizze zur Bestimmung des Drehpunktes,
- Fig. 5: Prinzipskizze einer ersten Abzugsgeometrie,
- Fig. 6: Diagramm der Transportgeschwindigkeiten in der ersten und zweiten Transportstrecke,
- Fig. 7: Prinzipskizze einer zweiten Abzugsgeometrie,
- Fig. 8: Prinzipskizze einer dritten Abzugsgeometrie,
- Fig. 9: Prinzipskizze einer Seitenansicht einer Doppelabzugsvorrichtung,
- Fig. 10: Prinzipskizze einer Seitenansicht einer Vierfachabzugsvorrichtung,
- Fig. 11: Prinzipskizze möglicher Teilstrecken der ersten Transportstrecke,
- Fig. 12: Prinzipskizze von möglichen Teilstrecken der zweiten Transportstrecke und
- Fig. 13: Prinzipskizze einer Lagesortiervorrichtung.

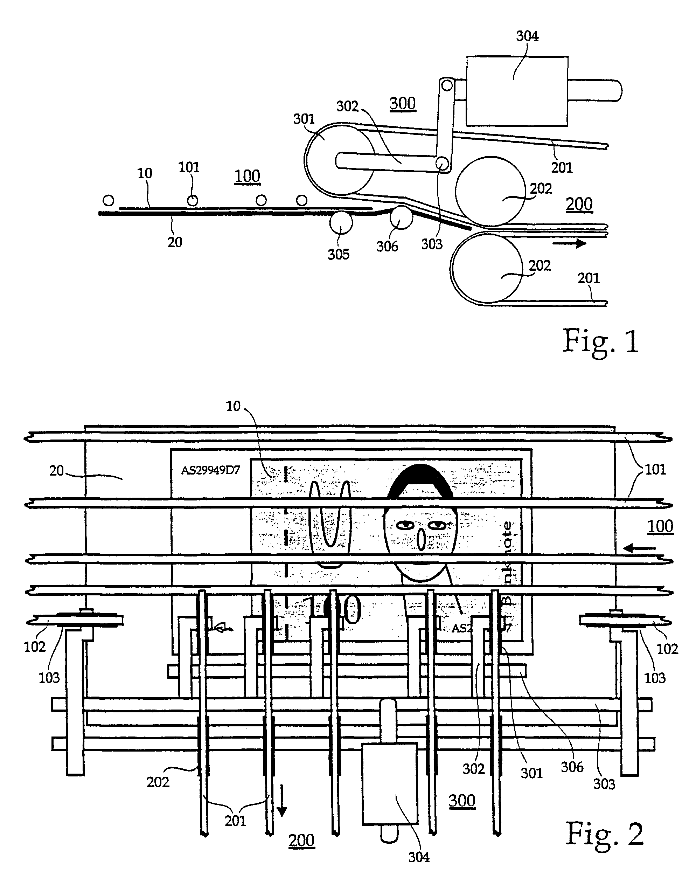

Die Fig. 1 zeigt die Prinzipskizze einer Seitenansicht gemäß einer bevorzugten Ausführungsform der Erfindung. Das Blattgut 10 wird im Abzugsbereich des ersten Transportsystems 100 mittels dem Transportmedium 101 des ersten Transportsystems über eine Führungsplatte 20 transportiert. Das Blattgut 10 wird vom ersten Transportsystem 100 in eine Richtung senkrecht zur Bildebene transportiert.

Nach dem Abzug wird das Blattgut 10 vom zweiten Transportsystem 200 in Pfeilrichtung transportiert. Das zweite Transportsystem 200 ist senkrecht zur ersten Transportstrecke 100 angeordnet. Es besteht aus Transportmedien 201 und Transporträdern 202, über die das Transportmedium 201 geführt bzw. mit denen es angetrieben wird. Generell werden als Transportmedien bevorzugt elastische Riemen verwendet.

Um das Blattgut 10 ohne Lageänderung im Abzugsbereich aus der ersten Transportstrecke 100 in die zweite Transportstrecke 200 abzuziehen, ist eine Abzugseinrichtung 300 vorgesehen, die ein Abzugsrad 301 aufweist, um das das Transportmedium 201 der zweiten Transportstrecke umgelenkt wird. Das Abzugsrad 301 ist an einem Hebel 302 angeordnet, der um einen Drehpunkt 303 drehbar ist. Der Hebel 302 kann mittels eines Stellgliedes 304 aus der hier dargestellten Ruheposition in eine Abzugsposition bewegt werden. In der Abzugsposition wird das Blattgut 10 von dem um die Abzugsrolle 301 umgelenkten Transportmedium 201 und der Gegenrolle 305 erfaßt. Zusätzlich wird das Transportmedium 201 durch eine Umlenkrolle 306 gestützt.

Die Fig. 2 zeigt eine Prinzipskizze einer Aufsicht der oben beschriebenen bevorzugten Ausführungsform. Die Transportrichtungen des ersten Transportsystems 100 und des zweiten Transportsystems 200 sind durch entsprechende Pfeile gekennzeichnet. Um das Blattgut 10 sicher abziehen zu können, weist die Abzugseinrichtung 300 hier beispielsweise fünf Abzugsräder 301 auf, um die jeweils ein Transportmedium 201 der zweiten Transportstrecke 200 umgelenkt wird. Die Hebel 302 sind alle um den gleichen Drehpunkt 303 drehbar gelagert und werden simultan von einem Stellglied 304 aus einer Ruheposition in eine Abzugsposition oder umgekehrt bewegt.

Um die mögliche Angriffsfläche der Abzugseinrichtung 300 auf die Banknote 10 zu erhöhen, können bei Bedarf Transportmedien des ersten Transportsystems 100 im Abzugsbereich aufgetrennt oder umgelenkt werden. Beispielsweise ist hier das Transportmedium 102 der ersten Transportstrecke 100 aufgetrennt und wird über Umlenkräder 103 entsprechend umgelenkt.

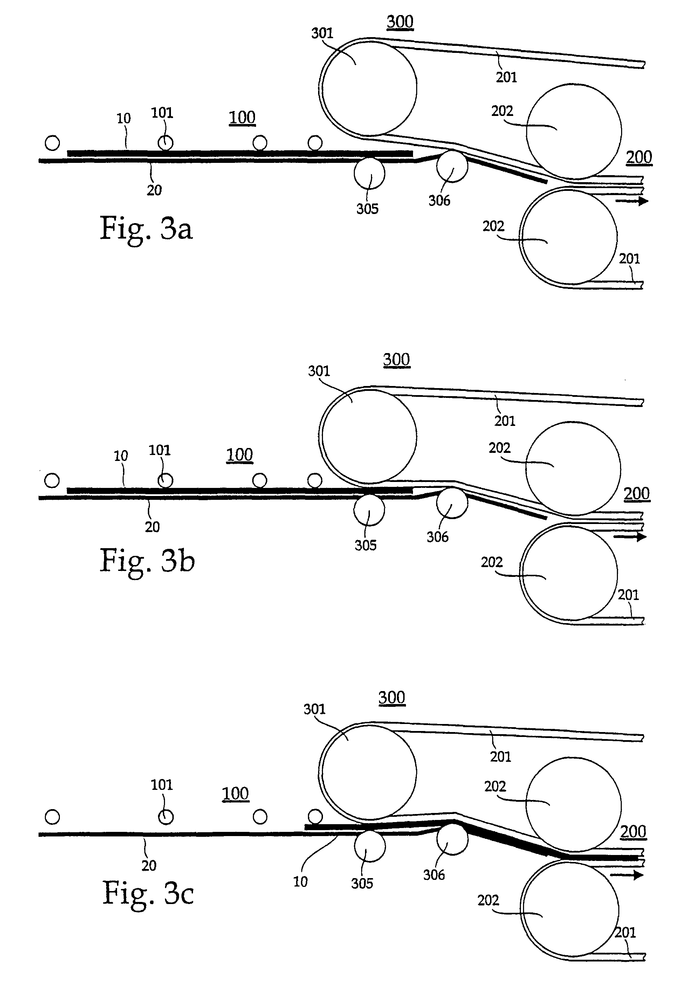

Die Fig. 3 zeigt eine Prinzipskizze der Funktionsweise der bevorzugten Ausführungsform in einer Seitenansicht. In derFig. 3a wird das Blattgut 10 von der ersten Transportstrecke 100 in den Abzugsbereich der Abzugseinrichtung 300 transportiert. Zu diesem Zeitpunkt befindet sich das Abzugsrad 301 in der Ruheposition.

Wie in Fig. 3b gezeigt wird zu einem bestimmten Zeitpunkt, dessen Bestimmung im folgenden noch erläutert wird, das Abzugsrad 301 in die Abzugsposition bewegt, so daß das Blattgut 10 von dem Transportmedium 201 der zweiten Transportstrecke 200 und der Gegenrolle 305 erfaßt wird. Beim Erfassen des Blattgutes wird dieses abgebremst und in Transportrichtung des zweiten Transportsystems 200 beschleunigt. Der beim Bremsen bzw. beim Beschleunigen der Banknote am Transportmedium 201 entstehende Verschleiß, wird statistisch über das gesamte Transportmedium 201 verteilt. Da dieses beispielsweise im Vergleich mit dem Umfang des Abzugsrades 301 eine sehr große Länge aufweist und der Verschleiß gleichmäßig über das Transportmedium 201 verteilt wird, kann dieses relativ lange wartungsfrei benutzt werden.

Die Fig. 3c zeigt, wie das Blattgut 10 im Transportmedium 201 transportiert wird. Das Blattgut 10 wird hierbei zumindest einseitig von einem Transportmedium 201 transportiert, so daß das Blattgut 10 weder verknicken noch zerreißen kann. In dem Bereich des zweiten Transportsystems 200, in dem das Blattgut 10 lediglich von einem Transportmedium 201 transportiert wird, verhindern die Gegenrolle 305, die Umlenkrolle 306 bzw. die Führungsplatte 20 Störungen beim Transport.

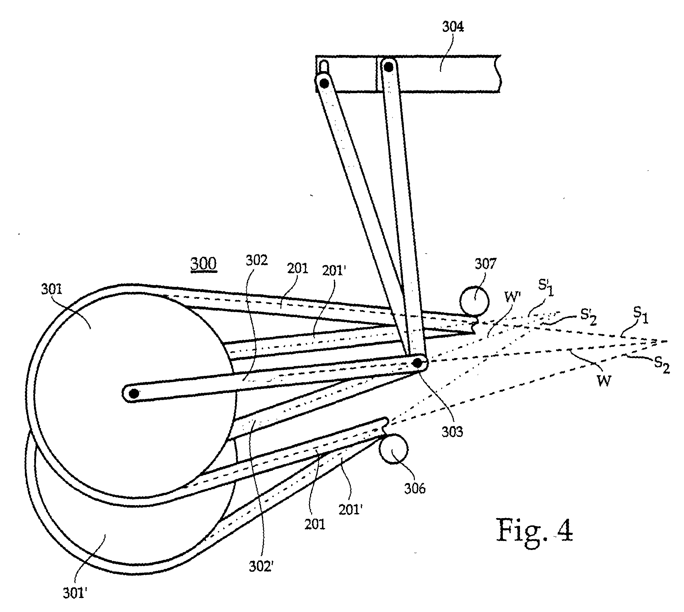

Die Fig. 4 zeigt, wie der Drehpunkt 303 des Hebels 302 gewählt wird, so daß die bei der Bewegung des Abzugsrades 301 von der Ruheposition in die Abzugsposition entstehenden Kräfte so gering wie möglich gehalten werden können. Da als Transportmedium 201 bevorzugt elastische Riemen verwendet werden, resultieren die auftretenden Kräfte im wesentlichen aus der Zugspannung im Transportmedium 201. Um einen Abzug von ca. 10 Blättern pro Sekunde gewährleisten zu können, muß auf das Transportmedium 201 ein relativ hoher Zug ausgeübt werden, um beispielsweise Schwingungen des Transportmediums 201 beim Übergang von der Ruheposition in die Abzugsposition zu verhindern. Wird der Drehpunkt 303 ungünstig gewählt, so bewirken die durch den Zug des Transportmediums 201 entstehenden Kräfte ein großes Drehmoment auf den Hebel 302, welches wiederum durch das Stellglied 304 kompensiert werden muß. Dies hat wiederum zur Folge, daß das Stellglied 304 entsprechend groß ausgelegt werden muß.

Zur Bestimmung des optimalen Drehpunkts 303 wird zunächst in der Ruheposition die Winkelhalbierende W des Winkels zwischen den Schenkeln S₁ und S₂ bestimmt. Die Schenkel S₁ und S₂ werden durch das Leertrum bzw. Lasttrum des Transportmediums 201 festgelegt. Das Leertrum bildet hierbei der Teil des Transportmediums 201 zwischen dem Berührungspunkt der Abzugsrolle 301 und dem Berührungspunkt mit der Umlenkrolle 307. Das Lasttrum stellt der Teil des Transportmediums 201 zwischen dem Berührungspunkt der Abzugsrolle 301 und dem Berührungspunkt der Umlenkrolle 306 dar. In einem zweiten Schritt wird die Winkelhalbierende W' des Winkels zwischen den Schenkeln S₁' und S₂' bestimmt. Die Schenkel S₁' und S₂' werden hierbei analog durch das Leertrum bzw. Lasttrum des Transportmediums 201' in der Abzugsposition definiert.

Der optimale Drehpunkt 303 wird nun durch den Schnittpunkt der Winkelhalbierenden W und W' festgelegt. Durch diese Wahl des Drehpunkts 303 ist gewährleistet, daß sich die Kräfte, die durch den Zug im Lasttrum bzw. Leertrum des Transportmediums 201 entstehen, so kompensieren, daß weder in der Ruheposition noch in der Abzugsposition ein Drehmoment auf den Hebel 302 wirkt. Vorteil dieser Ausführungsform ist es, daß die Bewegung des Abzugsrades 301 von der Ruheposition in die Abzugsposition mit geringer Krafteinwirkung durch das Stellglied 304 erzielt werden kann, so daß das Stellglied 304 entsprechend klein dimensioniert werden kann. Weiterhin können kurze Schaltzeiten des Stellgliedes 304 zwischen der Ruheposition und der Abzugsposition des Abzugsrades 301 erreicht werden.

Zur Bewegung des Abzugsrades 301 von der Ruheposition in die Abzugsposition weist das Stellglied 304 bevorzugt einen elektrisch ansteuerbaren Hubmagneten auf. Zudem wird in der Vorrichtung eine in den Figuren nicht dargestellte Steuerung vorgesehen, die den Abzugszeitpunkt der Abzugseinrichtung 300 steuert. Beispielhaft sollen im folgenden einige Möglichkeiten angegeben werden.

Wird in der Vorrichtung ein Taktgeber vorgesehen, der in regelmäßigen Zeitabständen ein Signal abgibt, so kann die Steuerung abhängig vom Takt dieses Taktgebers nach einer beliebigen, aber festgewählten Anzahl von Takten das Abzugsrad 301 von der Ruheposition in die Abzugsposition bewegen und dort für eine bestimmte Anzahl von Takten halten. Diese Vorgehensweise setzt jedoch voraus, daß auch die Banknoten 10 in einem regelmäßigen Takt in den Abzugsbereich der Abzugseinrichtung 300 transportiert werden und daß das Stellglied 304 elektrisch ansteuerbar ist.

Gelangen die Blätter in unregelmäßigen Zeitabständen in den Abzugsbereich der Abzugseinrichtung 300, so kann in der ersten Transportstrecke 100 ein Positionssensor vorgesehen werden, der die Vorder- und/oder Hinterkanten des Blattgutes 10 erkennt und ein Signal an die Steuerung überträgt, das die Anwesenheit bzw. Abwesenheit eines Blattguts 10 anzeigt. Abhängig vom Signal des Positionssensors kann nun die Steuerung den Abzugszeitpunkt wählen. Auch hier ist es notwendig, daß das Stellglied 304 elektrisch ansteuerbar ist.

Will man eine elektrische Steuerung des Abzugszeitpunkt vermeiden, so kann die Steuerung des Abzugszeitpunkts beispielsweise mittels eines mechanischen Koppelgestänges gesteuert werden. Ein solches Koppelgestänge kann beispielsweise über eine Kurbelstange im Antrieb der ersten Transportstrecke betätigt werden. Dies ist insbesondere dann möglich, wenn, wie oben beschrieben, lediglich geringe Kräfte zur Bewegung des Querabzugsrades 301 von der Ruheposition in die Abzugsposition notwendig sind.

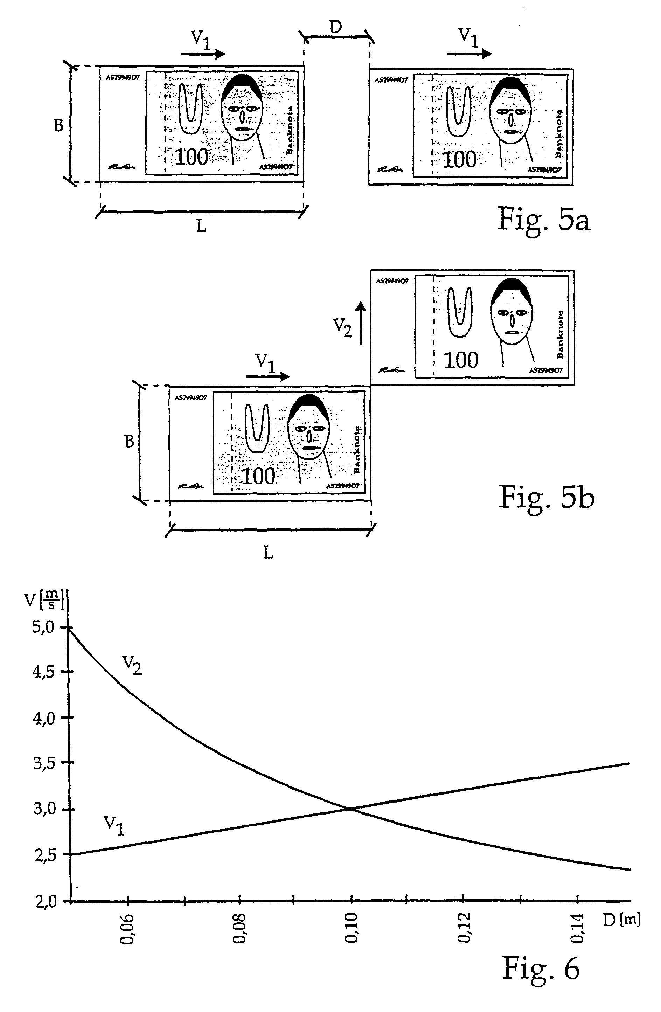

Um Störungen beim Abzug des Blattgutes 10 zu vermeiden, ist es notwendig, daß das erste Blatt schon abgezogen ist, bevor das nachfolgende Blatt in den Abzugsbereich gelangt. Die dazu gehörige Abzugsgeometrie ist in der Fig. 5 prinzipiell dargestellt. Die Fig. 5a zeigt, wie zwei Blätter mit jeweils einem Abstand D zwischen den einzelnen Blättern in der ersten Transportstrecke mit einer Transportgeschwindigkeit V₁ transportiert werden. Das rechteckige Blattgut wird über seiner Länge L und seiner Breite B charakterisiert. Um beim Abzug des ersten Blattgutes Überlappungen der beiden Blätter zu vermeiden, muß, wie in Fig. 5b dargestellt, das mit einer Geschwindigkeit V₂ abgezogene Blatt den Abzugsbereich schon verlassen haben, bevor das nachfolgende Blatt von der ersten Transportstrecke 100 in den Abzugsbereich transportiert wird.

Weisen alle Blätter dieselbe Länge L und Breite B und denselben Abstand D zwischen zwei Blättern auf, lassen sich bei einem vorher festgelegten, gewünschten Durchsatz N der Vorrichtung Relationen für die Transportgeschwindigkeit V₁ der ersten Transportstrecke 100 und der Transportgeschwindigkeit V₂ der zweiten Transportstrecke 200 herleiten. Bei vorgegebenem Durchsatz N gilt für die Transportgeschwindigkeit V₁ der ersten Transportstrecke 100 die Relation V₁ = N*(L+D). Um Überlappungen der beiden Blätter beim Abzug zu verhindern, muß die Transportgeschwindigkeit V₂ der zweiten Transportstrecke 200 größer oder gleich dem Produkt aus Transportgeschwindigkeit V₁ der ersten Transportstrecke 100 und der Breite B des nachfolgenden Blattes geteilt durch den Abstand D zwischen diesen Blättern gewählt werden. Es gilt V₂ = V₁*B/D.

In Fig. 6 sind die Transportgeschwindigkeiten V₁ und V₂ in Abhängigkeit vom Abstand D zwischen den Blättern aufgetragen. Wie oben ausgeführt, wächst die Transportgeschwindigkeit V₁ linear mit dem Abstand D. Zur Vermeidung von Überlappungen muß die Transportgeschwindigkeit V₂ größer oder gleich der Kurve V₂ sein, d.h. die Transportgeschwindigkeit V₂ muß in dem grau markiertem Bereich liegen.

Als Zahlenbeispiel wurden N = 10 1/s, L = 0,2 m und B = 0,1 m gewählt. Wie man in der Fig. 6 erkennt, können für den Abstand D = 0,1 m die Geschwindigkeiten V₁ und V₂ gleich gewählt werden. Für kleinere Abstände D ist die Geschwindigkeit V₂ immer größer als die Geschwindigkeit V₁. Bei kleinerem Abstand D kann die Geschwindigkeit V₂ auch kleiner als die Geschwindigkeit V₁ gewählt werden.

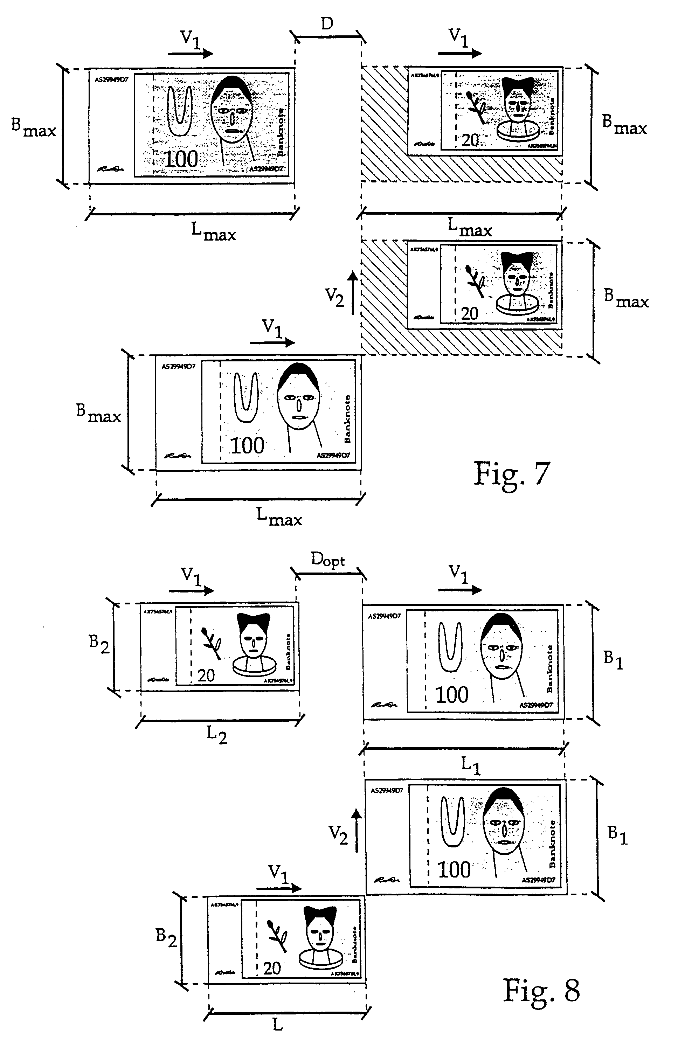

Für den Fall, daß nicht alle Blätter die gleiche Länge L und Breite B aufweisen, läßt sich, wie in Fig. 7 dargestellt, abhängig von der maximalen Länge Lₘₐₓ des längsten abzuziehenden Blattgutes und der maximalen Breite des Bₘₐₓ des breitesten abzuziehenden Blattgutes ein hier schraffiert dargestellter Bereich der Länge Lₘₐₓ und der Breite Bₘₐₓ für jedes Blattgut 10 vorsehen. Zwischen den Bereichen ist ein Abstand D analog zur Fig. 5 vorgesehen. Innerhalb der schraffierten Bereiche können die einzelnen Blätter 10 prinzipiell beliebig angeordnet werden. Bevorzugt wird die rechte obere Ecke eines jeden Blattguts in der rechten oberen Ecke des jeweiligen Bereichs angeordnet.

Die oben angegebenen Relationen für die Transportgeschwindigkeit V₁ der ersten Transportstrecke 100 und der Transportgeschwindigkeit V₂ der zweiten Transportstrecke 200 gelten hier analog. Die Länge L entspricht dabei der Länge Lₘₐₓ und die Breite B entspricht der Breite Bₘₐₓ.

Eine weitere Möglichkeit zum Abziehen von Blätter unterschiedlicher Größe ist in Fig. 8 gezeigt und besteht darin, bei vorgegebener Transportgeschwindigkeit V₁ der ersten Transportstrecke 100 und Transportgeschwindigkeit V₂ der zweiten Transportstrecke 200 den Durchsatz N der Vorrichtung, der die Anzahl der abgezogenen Blätter pro Sekunde angibt, durch Anpassung des Abstandes D zwischen zwei Blättern zu optimieren. Hierzu wird beispielsweise bei der Vereinzelung des Blattguts 10 die Breite B₁ des Blattguts detektiert und aus der Transportgeschwindigkeit V₁ und V₂ sowie der detektierten Breite B₁ ein optimaler Abstand Dₒₚₜ bestimmt. Dieser ergibt sich als Dₒₚₜ = B₁*V₁/V₂. Das dem detektierten Blattgut nachfolgende Blattgut wird so vereinzelt, daß zwischen den beiden Blättern der optimale Abstand Dₒₚₜ eingehalten ist. Der Durchsatz N der Vorrichtung ist somit nicht konstant sondern hängt von den unterschiedlichen Längen und Breiten der einzelnen Blätter ab.

Sollte der optimale Abstand Dₒₚₜ aufgrund der Parameter kleiner sein als ein für den reibungsfreien Betrieb der Vorrichtung notwendiger minimaler Abstand Dₘᵢₙ so kann der optimale Abstand Dₒₚₜ durch den minimalen Abstand Dₘᵢₙ ersetzt werden. Der minimale Abstand Dₘᵢₙ kann beispielsweise durch Weichen im Transportsystem bestimmt werden, die abhängig von der Transportgeschwindigkeit im Transportsystem einen gewissen Abstand zwischen zwei Blättern für einen sicheren Eingriff einer Weiche zwischen diesen Blättern benötigen.

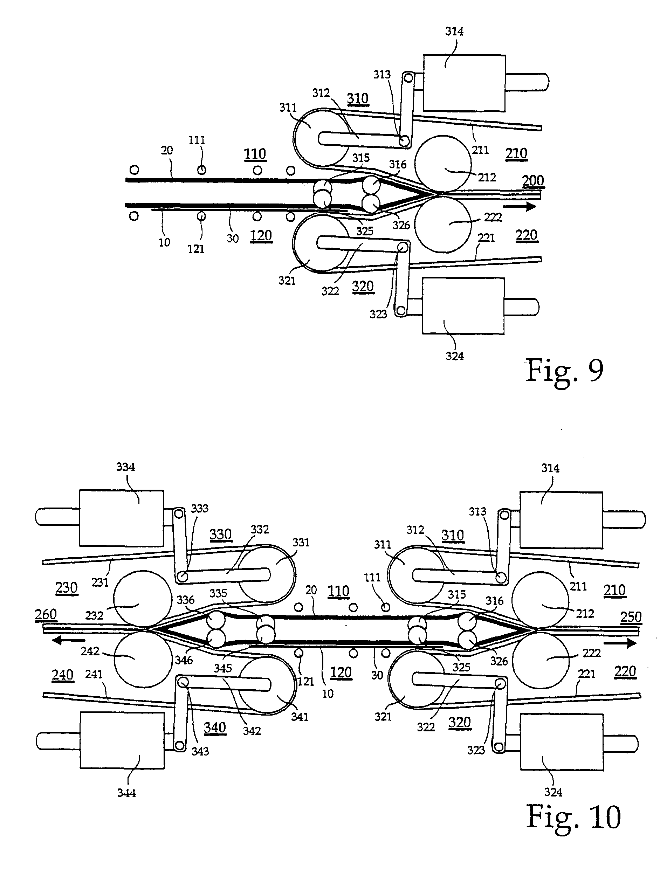

Die Fig. 9 zeigt eine Prinzipskizze einer Seitenansicht einer Doppelabzugsvorrichtung, bei der die erste Transportstrecke eine Weiche aufweist, mit der das Blattgut entweder in eine obere erste Teilstrecke 110 oder eine untere erste Teilstrecke 120 geleitet wird. Die Teilstrecken 110 und 120 sind analog zum ersten Transportsystem 100 aufgebaut. Sie weisen jeweils Transportmedien 111, 121 auf, die das Blattgut 10 über eine Führungsplatte 20, 30 transportieren. Weiterhin ist jeweils eine Abzugseinrichtung 310, 320 vorgesehen, die das Blattgut aus einem oberen bzw. unteren Abzugsbereich abziehen. Die Abzugseinrichtungen 310, 320 sind analog zur Abzugseinrichtung 300 der Fig. 1 aufgebaut. Sie weisen jeweils ein Abzugsrad 311, 321, das an jeweils einem um einen Drehpunkt 313, 323 drehbaren Hebel 312, 322 angebracht ist. Die Hebel 312, 322 werden jeweils über Stellglieder 314, 324 aus einer Ruheposition in eine Abzugsposition bewegt. Zudem weisen die Abzugseinrichtungen 310, 320 entsprechende Gegenrollen 315, 325 und Umlenkrollen 316, 326 auf. Auch die zweite Transportstrecke 200 ist in zwei Teilstrecken 210, 220 aufgeteilt. Die Teilstrecken 210, 220 weisen jeweils ein Transportmedium 211, 221 sowie Transporträder 212, 222 auf.

In der Fig. 10 ist eine Vierfachabzugsvorrichtung gezeigt, bei der die Teilstrecken 110, 120 der ersten Transportstrecke 100 jeweils zwei Abzugseinrichtungen 310, 330 bzw. 320, 340 aufweisen. Die einzelnen Komponenten sind analog zur Fig. 9 bezeichnet. Die zweite Transportstrecke 200 weist hier jedoch vier Teilstrecken 210, 220, 230, 240 auf. Die Teilstrecken 210 und 220 werden zunächst in einer Zwischenstrecke 250 zusammengefaßt. Analog werden die Teilstrecken 230 und 240 in einer Zwischenstrecke 260 zusammengefaßt. Die Zwischenstrecken 250 und 260 werden dann wiederum in der zweiten Transportstrecke 200 zusammengefaßt.

Mittels der in Fig. 9 dargestellten Doppelabzugsvorrichtung bzw. der in Fig. 10 dargestellten Vierfachabzugsvorrichtung lassen sich, jeweils abhängig von der Führung des Blattguts 10 durch die einzelnen Teilstrecken, unterschiedliche Funktionalitäten gewährleisten.

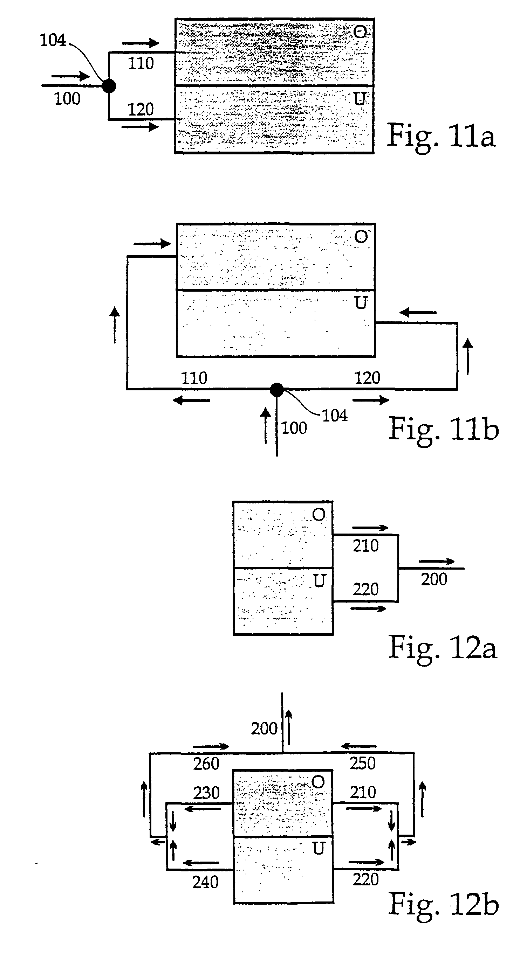

Fig. 11 zeigt zwei Möglichkeiten der Führung der ersten Teilstrecken 110 und 120. In Fig. 11a kann das über die erste Transportstrecke 100 antransportierte Blattgut mittels einer Weiche 104 auf eine der Teilstrecken 110 bzw. 120 gelenkt werden. Diese Teilstrecken münden dann entweder in den hier grau dargestellten oberen Abzugsbereich O oder in den unteren Abzugsbereich U. Das Blattgut wird von der oberen und unteren Teilstrecke 110 bzw. 120 sowohl im oberen als auch im unteren Abzugsbereich in dieselbe Richtung transportiert.

In der Fig. 11b wird das Blattgut im oberen und unteren Abzugsbereich von den ersten Teilstrecken 110 bzw. 120 in entgegengesetzter Richtung transportiert. Hierdurch wird erreicht, daß das Blattgut entweder in der ursprünglichen Lage oder in einer um die Breitenachse gewendeten Lage in den Abzugsbereich einer Abzugseinrichtung gelangt.

In der Fig. 12 sind unterschiedliche Möglichkeiten für die Teilstrecken 210 bis 260 der zweiten Transportstrecke 200 dargestellt. Die Fig. 10a zeigt die Führung der Teilstrecken 210 bzw. 220 für den Fall, daß im oberen Abzugsbereich O und im unteren Abzugsbereich U jeweils eine Abzugseinrichtung gemäß Fig. 9 vorgesehen ist. Das aus den Abzugsbereichen abgezogene Blattgut wird hier ohne Veränderung in der Lage in die zweite Transportstrecke 200 transportiert.

Die Fig. 10b zeigt eine mögliche Führung der Teilstrecken 210 bis 260 für den Fall, daß jeweils im oberen Abzugsbereich O und im unteren Abzugsbereich U zwei Abzugseinrichtungen gemäß der Fig. 10 vorgesehen sind. Wie hier dargestellt, wird das aus dem oberen bzw. unteren Abzugsbereich nach rechts abgezogene Blattgut über die Teilstrecken 210 und 220 in eine Zwischenstrecke 250 transportiert. Das nach links abgezogene Blattgut wird über die Teilstrecken 230 und 240 in eine Zwischenstrecke 260 transportiert. Die Zwischenstrecken 250 und 260 transportieren das Blattgut dann zur zweiten Transportstrecke 200. Mit dieser Anordnung der Teilstrecken 210 bis 260 ist es möglich, beispielsweise das links abgezogene Blattgut gegenüber dem rechts abgezogenen Blattgut um die Längsachse des Blattguts zu wenden, bevor es in die Transportstrecke 200 gelangt.

Durch geeignete Kombinationen der Teilstrecken können unterschiedliche Funktionalitäten der Vorrichtung gewährleistet werden. Zur Erhöhung des Durchsatzes ist es beispielsweise möglich, die ersten Teilstrecken 110, 120 gemäß der Fig. 11a und die zweiten Teilstrecken 210, 220 gemäß der Fig. 12a anzuordnen. Werden nun die vom ersten Transportsystem 100 antransportierten Blätter abwechselnd in die Teilstrecken 110 bzw. 120 transportiert, so ist es möglich, die Transportgeschwindigkeit der ersten Transportstrecke 100 wesentlich zu erhöhen, da jeweils nur jedes zweite Blatt von der jeweiligen Abzugseinrichtung abgezogen werden muß. Der Abstand D im jeweiligen Abzugsbereich ist in diesem Fall immer größer als die Länge L des Blattguts.

Kombiniert man die Teilstrecken gemäß Fig. 11b und 12a, können Blätter, die mit der Oberseite nach oben antransportiert werden, beispielsweise im oberen Abzugsbereich O abgezogen werden, während Blätter mit der Unterseite nach oben im unteren Abzugsbereich U abgezogen werden und somit gegenüber dem aus dem oberen Abzugsbereich O abgezogenen Blattgut gewendet werden. Das in der zweiten Transportstrecke 200 transportierte Blattgut ist somit immer mit der Oberseite nach oben orientiert.

Kombiniert man die Teilstrecken gemäß der Fig. 11b und 12b, erhält man eine Sortiervorrichtung, die das Blattgut zusätzlich um die Längsachse des Blattguts 10 wenden kann. Mit dieser Anordnung ist es möglich, beliebig orientiertes Blattgut mittels der ersten Transportstrecke 100 anzutransportieren und dieses durch geeignetes Wenden innerhalb der Sortiervorrichtung in der Lage so zu verändern, daß das Blattgut in der Transportstrecke 200 immer mit der Oberseite nach oben und der Vorderkante nach vorne transportiert wird.

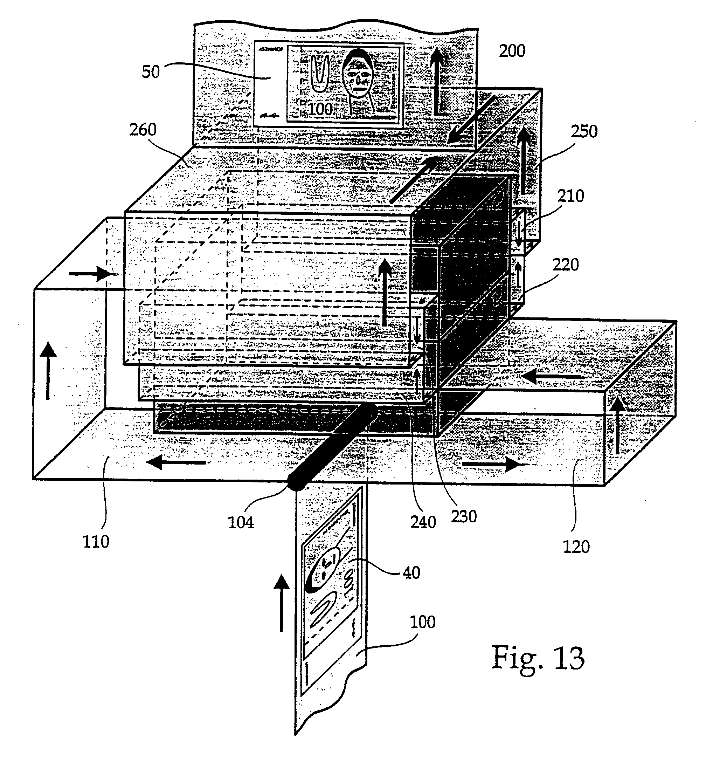

Eine solche Sortiervorrichtung ist in der Fig. 13 schematisch dargestellt. Um Überlappungen in der Transportstrecke 100, 200 zu vermeiden, werden die Teilstrecken 110, 120, 210, 220, 230, 240 und die Zwischenstrecken 250, 260 bevorzugt gleich lang ausgelegt. Hierdurch kann gewährleistet werden, daß der Abstand zweier Blätter in der Transportstrecke 200 gleich ist, egal über welche Teilstrecken das Blattgut transportiert wurde.

Die Abzugszeitpunkte der jeweiligen Abzugseinrichtungen 310, 320, 330, 340 werden von einer Steuerung gesteuert und entsprechend koordiniert. Für die in Fig. 13 dargestellte Sortiervorrichtung kann beispielsweise die Lage des Blattguts 40 in der ersten Transportstrecke 100 mittels geeigneter Sensoren detektiert werden. Die Steuerung wertet diese Information dann entsprechend aus und koordiniert die Weiche 104 bzw. die Abzugszeitpunkte der einzelnen Abzugseinrichtungen so, daß das Blattgut 50 die Sortiervorrichtung in einer definierten Lage verläßt.

Bevorzugt werden in den oberen Abzugsbereichen O bzw. in den unteren Abzugsbereichen U die in Fig. 9 bzw. 10 dargestellten Abzugseinrichtungen verwendet. Prinzipiell können die oben beschriebenen Vorrichtungen zur Erhöhung des Durchsatzes bzw. zur Sortierung der Lage des Blattgutes auch mit anderen Abzugseinrichtungen, wie beispielsweise mit Abzugseinrichtungen gemäß der eingangs zitierten Schriften, ausgeführt werden.

## Patentansprüche

1. Vorrichtung zum Ändern der Bewegungsrichtung von flachem, rechteckigem Blattgut, wie z. B. Belege oder Banknoten, mit
- einer ersten Transportstrecke (100) zum Antransport des Blattguts (10) mit jeweils einem Abstand (D) zwischen zwei einzelnen Blättern und
- einer zweiten Transportstrecke (200) zum Weitertransport des Blattguts (10), die rechtwinkelig zur ersten Transportstrecke (100) angeordnet ist,
- mindestens einer Abzugseinrichtung (300), mittels der das Blattgut (10) in einem Abzugsbereich aus der ersten Transportstrecke (100) in die zweite Transportstrecke (200) abgezogen wird, welche das Blattgut in eine Richtung senkrecht zu der Richtung der ersten Transportstrekke (100) transportiert,
**dadurch gekennzeichnet, daß** die Abzugseinrichtung (300) das Blattgut (10) direkt mittels des sich über die Länge der zweiten Transportstrecke (200) erstreckenden Transportmediums (201) abzieht, wozu die Abzugseinrichtung (300) mindestens ein Querabzugsrad (301) aufweist, um das das Transportmedium (201) der zweiten Transportstrecke (200) umgelenkt wird.

2. Vorrichtung nach Anspruch 1, **dadurch gekennzeichnet, daß** das Transportmedium (201) ein elastischer Riemen ist.

3. Vorrichtung nach Anspruch 1 oder 2, **dadurch gekennzeichnet, daß** die Querabzugsräder (301) an mindestens einem Hebel (302) angeordnet sind, der um einen Drehpunkt (303) drehbar ist.

4. Vorrichtung nach Anspruch 3, **dadurch gekennzeichnet, daß** die Hebel (302) mittels mindestens eines Stellgliedes (304) aus einer Ruheposition in eine Abzugsposition bewegt werden.

5. Vorrichtung nach Anspruch 4, **dadurch gekennzeichnet, daß** die Drehpunkte (303) der Hebel (302) jeweils auf der Winkelhalbierenden (W) zwischen Leertrum (S₁) und Lasttrum (S₂) des Transportmediums (201) in der Ruheposition liegen.

6. Vorrichtung nach Anspruch 4, **dadurch gekennzeichnet, daß** die Drehpunkte (303) der Hebel (302) jeweils auf der Winkelhalbierenden (W') zwischen Leertrum (S'₁) und Lasttrum (S'₂) des Transportmediums (201') in der Abzugsposition liegen.

7. Vorrichtung nach Anspruch 4, **dadurch gekennzeichnet, daß** die Drehpunkte (303) der Hebel (302) jeweils auf dem Schnittpunkt der Winkelhalbierenden (W) zwischen Leertrum (S₁) und Lasttrum (S₂) des Transportmediums (201) in der Ruheposition und der Winkelhalbierenden (W') zwischen Leertrum (S'₁) und Lasttrum (S'₂) des Transportmediums 201' in der Abzugsposition liegen.

8. Vorrichtung nach einem der Ansprüche 4 bis 7, **dadurch gekennzeichnet, daß** mindestens ein Stellglied (304) einen Hubmagneten aufweist.

9. Vorrichtung nach einem der Ansprüche 1 bis 8, **dadurch gekennzeichnet, daß** eine Steuerung vorgesehen ist, die den Abzugszeitpunkt der Abzugseinrichtung (300) steuert.

10. Vorrichtung nach Anspruch 9, **dadurch gekennzeichnet, daß** ein Taktgeber vorgesehen ist und die Steuerung den Abzugszeitpunkt abhängig vom Takt des Taktgebers wählt.

11. Vorrichtung nach Anspruch 9, **dadurch gekennzeichnet, daß** in der ersten Transportstrecke (100) ein Positionssensor für die Vorderkanten und/oder Hinterkanten des Blattguts (10) vorgesehen ist und die Steuerung den Abzugszeitpunkt abhängig vom Signal des Positionssensors wählt.

12. Vorrichtung nach Anspruch 9, **dadurch gekennzeichnet, daß** die Steuerung den Abzugszeitpunkt mittels eines mechanischen Koppelgestänges steuert.

13. Vorrichtung nach Anspruch 1, **dadurch gekennzeichnet, daß** die erste Transportstrecke (100) und die zweite Transportstrecke (200) von mindestens einem Antrieb angetrieben wird, wobei die Transportgeschwindigkeit (V₂) der zweiten Transportstrecke (200) größer oder gleich ist dem Produkt aus der Transportgeschwindigkeit (V₁) der ersten Transportstrecke (100) und der Breite (B) eines Blattes geteilt durch den Abstand (D) zwischen zwei Blättern.

14. Vorrichtung nach Anspruch 1, **dadurch gekennzeichnet, daß** die erste Transportstrecke (100) mit einer Transportgeschwindigkeit (V₁) und die zweite Transportstrecke (200) mit einer Transportgeschwindigkeit (V₂) von mindestens einem Antrieb angetrieben wird, wobei der Abstand (Dₒₚₜ) zwischen zwei Blättern größer oder gleich dem Produkt der Breite (B₁) des ersten Blattes der beiden Blätter und der Transportgeschwindigkeit (V₁) der ersten Transportstrecke (100) geteilt durch die Transportgeschwindigkeit (V₂) der zweiten Transportstrecke (200) ist.

15. Vorrichtung nach einem der Ansprüche 1 bis 14, **dadurch gekennzeichnet, daß** die erste Transportstrecke (100) eine Weiche (104) aufweist, mit der das Blattgut (10) entweder in eine obere oder eine untere erste Teilstrecke (110, 120) geleitet wird, die das Blattgut (10) jeweils in den Abzugsbereich mindestens einer Abzugseinrichtung (310, 320) transportieren.

16. Vorrichtung nach Anspruch 15, **dadurch gekennzeichnet, daß** das Blattgut im Abzugsbereich von der oberen und unteren ersten Teilstrecke (110, 120) in dieselbe Richtung transportiert wird.

17. Vorrichtung nach Anspruch 15, **dadurch gekennzeichnet, daß** das Blattgut im Abzugsbereich von der oberen und unteren ersten Teilstrecke (110, 120) in entgegengesetzter Richtung transportiert wird.

18. Vorrichtung nach einem der Ansprüche 15 bis 17, **dadurch gekennzeichnet, daß** die ersten Teilstrecken (110, 120) die gleiche Länge aufweisen.

19. Vorrichtung nach Anspruch 15, **dadurch gekennzeichnet, daß** die zweite Transportstrecke (200) eine obere und eine untere zweite Teilstrecke (210, 220) aufweist, mittels denen das von der Abzugseinrichtung (310, 320) im Abzugsbereich der entsprechenden Teilstrecke (110, 120) der ersten Transportstrecke (100) abgezogene Blattgut (10) in eine gemeinsame zweite Transportstrecke (200) transportiert wird.

20. Vorrichtung nach Anspruch 15, **dadurch gekennzeichnet, daß** sowohl die obere als auch die untere erste Teilstrecke (110,120) eine rechte und eine linke Abzugseinrichtung (310, 320, 330, 340) aufweisen, die das Blattgut entweder nach links oder rechts rechtwinkelig aus dem Abzugsbereich abziehen.

21. Vorrichtung nach Anspruch 20, **dadurch gekennzeichnet, daß** die zweite Transportstrecke (200) eine obere rechte, eine obere linke, eine untere rechte und eine untere linke zweite Teilstrecke (210, 220, 230, 240) aufweist, mittels denen das von der rechten bzw. linken Abzugseinrichtung (310, 320, 330, 340) im Abzugsbereich der entsprechenden Teilstrecke (110, 120) der ersten Transportstrecke (100) abgezogene Blattgut (10) in eine gemeinsame zweite Transportstrecke (200) transportiert wird.

22. Vorrichtung nach einem der Ansprüche 15 bis 21, **dadurch gekennzeichnet, daß** die entsprechenden zweiten Teilstrecken (210, 220, 230, 240, 250, 260) jeweils die gleiche Länge aufweisen.

23. Vorrichtung nach einem der Ansprüche 15 bis 21, **dadurch gekennzeichnet, daß** eine Steuerung vorgesehen ist, die die Abzugseinrichtungen (310, 320, 330, 340) und den Abzugszeitpunkt in den jeweiligen Abzugseinrichtungen (310, 320, 330, 340) steuert und koordiniert.

24. Vorrichtung nach Anspruch 23, **dadurch gekennzeichnet, daß** die Steuerung zur Koordination der Abzugseinrichtungen (310, 320, 330, 340) und des Abzugszeitpunkts in den jeweiligen Abzugseinrichtungen (310, 320, 330, 340) die Lage des Blattguts (10) in der ersten Transportstrecke (100) auswertet.

## Claims

1. An apparatus for changing the direction of motion of flat, rectangular sheet material such as documents or bank notes, comprising:
- a first transport path (100) for arriving transport of the sheet material (10) with a distance (D) between every two individual sheets, and
- a second transport path (200) for further transport of the sheet material (10) which is disposed at right angles to the first transport path (100),
- at least one draw-off device (300) for drawing off the sheet material (10) in a draw-off area from the first transport path (100) to the second transport path (200) which transports the sheet material in a direction perpendicular to the direction of the first transport path (100),
**characterized in that** the draw-off device (300) draws off the sheet material (10) directly by means of the transport medium (201) extending over the length of the second transport path (200),. for which purpose the draw-off device (300) has at least one transverse draw-off wheel (301) about which the transport medium (201) of the second transport path (200) is deflected.

2. An apparatus according to claim 1, **characterized in that** the transport medium (201) is an elastic belt.

3. An apparatus according to claim 1 or 2, **characterized in that** the transverse draw-off wheels (301) are disposed on at least one lever (302) rotatable about a pivot (303).

4. An apparatus according to claim 3, **characterized in that** the levers (302) are moved from an inoperative position to a draw-off position by means of at least one actuator (304).

5. An apparatus according to claim 4, **characterized in that** the pivots (303) of the levers (302) are located on the median line (W) between empty strand (S₁) and load strand (S₂) of the transport medium (201) in the inoperative position.

6. An apparatus according to claim 4, **characterized in that** the pivots (303) of the levers (302) are located on the median line (W') between empty strand (S'₁) and load strand (S'₂) of the transport medium (201') in the draw-off position.

7. An apparatus according to claim 4, **characterized in that** the pivots (303) of the levers (302) are located on the intersecting point of the median line (W) between empty strand (S₁) and load strand (S₂) of the transport medium (201) in the inoperative position and the median line (W') between empty strand (S'₁) and load strand (S'₂) of the transport medium (201') in the draw-off position.

8. An apparatus according to any of claims 4 to 7, **characterized in that** at least one actuator (304) has a lifting magnet.

9. An apparatus according to any of claims 1 to 8, **characterized in that** a control unit is provided for controlling the draw-off time of the draw-off device (300).

10. An apparatus according to claim 9, **characterized in that** a clock generator is provided and the control unit selects the draw-off time in accordance with the timing of the clock generator.

11. An apparatus according to claim 9, **characterized in that** a position sensor for the leading edges and/or trailing edges of the sheet material (10) is provided in the first transport path (100) and the control unit selects the draw-off time in accordance with the signal from the position sensor.

12. An apparatus according to claim 9, **characterized in that** the control unit controls the draw-off time by means of a mechanical coupler rod system.

13. An apparatus according to claim 1, **characterized in that** the first transport path (100) and the second transport path (200) are driven by at least one drive, the transport speed (V₂) of the second transport path (200) being greater than or equal to the product of the transport speed (V₁) of the first transport path (100) and the width (B) of a sheet divided by the distance (D) between two sheets.

14. An apparatus according to claim 1, **characterized in that** the first transport path (100) is driven at a transport speed (V₁) and the second transport path (200) at a transport speed (V₂) by at least one drive, the distance (Dₒₚₜ) between two sheets being greater than or equal to the product of the width (B₁) of the first sheet of the two sheets and the transport speed (V₁) of the first transport path (100) divided by the transport speed (V₂) of the second transport path (200).

15. An apparatus according to any of claims 1 to 14, **characterized in that** the first transport path (100) has a switch (104) for guiding the sheet material (10) into either an upper or a lower first partial path (110, 120) which transports the sheet material (10) into the draw-off area of at least one draw-off device (310, 320).

16. An apparatus according to claim 15, **characterized in that** the sheet material is transported in the same direction in the draw-off area by the upper and lower first partial paths (110, 120).

17. An apparatus according to claim 16, **characterized in that** the sheet material is transported in opposite directions in the draw-off area by the upper and lower first partial paths (110, 120).

18. An apparatus according to any of claims 15 to 17, **characterized in that** the first partial paths (110, 120) have the same length.

19. An apparatus according to claim 15, **characterized in that** the second transport path (200) has an upper and a lower second partial path (210, 220) for transporting the sheet material (10) drawn off by the draw-off device (310, 320) in the draw-off area of the corresponding partial path (110, 120) of the first transport path (100) into a common second transport path (200).

20. An apparatus according to claim 15, **characterized in that** both the upper and the lower first partial paths (110, 120) have a right and a left draw-off device (310, 320, 330, 340) which draw off the sheet material from the draw-off area either to the left or right at right angles.

21. An apparatus according to claim 20, **characterized in that** the second transport path (200) has an upper right, an upper left, a lower right and a lower left second partial path (210, 220, 230, 240) for transporting the sheet material (10) drawn off by the right or left draw-off device (310, 320, 330, 340) in the draw-off area of the corresponding partial path (110, 120) of the first transport path (100) into a common second transport path (200).

22. An apparatus according to any of claims 15 to 21, **characterized in that** the corresponding second partial paths (210, 220, 230, 240, 250, 260) each have the same length.

23. An apparatus according to any of claims 15 to 21, **characterized in that** a control unit is provided for controlling and coordinating the draw-off devices (310, 320, 330, 340) and the draw-off time in the particular draw-off devices (310, 320, 330, 340).

24. An apparatus according to claim 23, **characterized in that** the control unit evaluates the position of the sheet material (10) in the first transport path (100) for coordinating the draw-off devices (310, 320, 330, 340) and the draw-off time in the particular draw-off devices (310, 320, 330, 340).

## Revendications

1. Dispositif pour modifier le sens de déplacement d'un produit en feuilles rectangulaires plates, telles que par exemple des documents ou des billets de banque, comprenant :
- un premier parcours de transport (100) pour le transport initial du produit en feuilles (10) avec chaque fois une distance (D) entre deux feuilles individuelles, et
- un deuxième parcours de transport (200) pour la poursuite du transport du produit en feuilles (10), qui est disposé perpendiculairement au premier parcours de transport (100),
- au moins un organe d'extraction (300) au moyen duquel le produit en feuilles (10) est extrait dans une zone d'extraction du premier parcours de transport (100) pour passer dans le deuxième parcours de transport (200), qui transporte le produit en feuilles dans une direction perpendiculaire à la direction du premier parcours de transport (100),
**caractérisé en ce que** l'organe d'extraction (300) extrait le produit en feuilles 10 directement au moyen du milieu du transport (201) s'étendant sur la longueur du deuxième parcours de transport (200), et qu'à cet effet l'organe d'extraction (300) comporte au moins une roue (301) d'extraction transversale afin que celle-ci modifie la direction du milieu de transport (201) du deuxième parcours de transport (200).

2. Dispositif selon la revendication 1 **caractérisé en ce que** le milieu de transport (201) est une courroie élastique.

3. Dispositif selon la revendication 1 ou 2, **caractérisé en ce que** les roues d'extraction transversale (301) sont disposées sur au moins un levier (302), qui est susceptible de tourner autour d'un point de rotation (303).

4. Dispositif selon la revendication 3, **caractérisé en ce que** le levier (302) est déplacé au moyen d'au moins un organe de réglage (304) d'une position de repos à une position d'extraction.

5. Dispositif selon la revendication 4, **caractérisé en ce que** les centres de rotation (303) du levier (302) sont situés chaque fois sur une bissectrice angulaire (W) entre le brin vide (S1) et le brin chargé (S2) du milieu de transport (201) dans la position de repos.

6. Dispositif selon la revendication 4 **caractérisé en ce que** les centres de rotation (303) du levier (302) sont situés chaque fois sur les bissectrices angulaires (W) entre le brin vide (S'1) et le brin chargé (S'2) du milieu de transport (201') dans la position de retrait.

7. Dispositif selon la revendication 4 **caractérisé en ce que** les centres de rotation (303) du levier (302) sont situés chaque fois sur le point d'intersection des bissectrices angulaires (W) entre le brin vide (S1) et le brin chargé (S2) du milieu de transport (201) dans la position de repos et les bissectrices (W') entre le brin vide (S'1) et le brin chargé (S'2) du milieu de transport (201') dans la position d'extraction.

8. Dispositif selon l'une des revendications 4 à 7, **caractérisé en ce qu'**au moins un organe de réglage (304) comporte un aimant de levage.

9. Dispositif selon l'une des revendications 1 à 8, **caractérisé en ce qu'**est prévue une commande, qui commande l'instant d'extraction de l'organe d'extraction (300).

10. Dispositif selon la revendication 9, **caractérisé en ce qu'**un générateur de rythme est prévu et **en ce que** la commande choisit l'instant d'extraction en fonction du rythme du générateur de rythme.

11. Dispositif selon la revendication 9, **caractérisé en ce que** dans le premier parcours de transport (100), est prévu un capteur de position pour les bords avant et/ou les bords arrière du produit en feuilles 10 et **en ce que** la commande choisit l'instant d'extraction en fonction du signal du capteur de position.

12. Dispositif selon la revendication 9, **caractérisé en ce que** la commande de l'instant d'extraction est commandé au moyen d'une timonerie mécanique de couplage.

13. Dispositif selon la revendication 1, **caractérisé en ce que** le premier parcours de transport (100) et le deuxième parcours de transport (200) sont entraînés par au moins un entraînement, **en ce que** la vitesse de transport (V2) du deuxième parcours de transport (200) est supérieure ou égale au produit de la vitesse de transport (V1) du premier parcours de transport (100) par la largeur (B) d'une feuille divisée par la distance (V) entre deux feuilles.

14. Dispositif selon la revendication 1, **caractérisé en ce que** le premier parcours de transport (100) avec une vitesse de transport (V1) et le deuxième parcours de transport (200) avec une vitesse de transport (V2) sont entraînés par au moins un entraînement, la distance (Dₒₚₜ) entre deux feuilles étant supérieure ou égale au produit de la largeur (B1) de la première feuille des deux feuilles par la vitesse de transport (V1) du premier parcours de transport (100) divisée par la vitesse de transport (V2) du deuxième parcours de transport (200).

15. Dispositif selon l'une des revendications 1 à 14, **caractérisé en ce que** le premier parcours (100) comporte un aiguillage (104), à l'aide duquel le produit en feuilles (10) est conduit dans un premier parcours partiel (110), (120) soit supérieur soit inférieur, qui transporte le produit en feuilles (10), chaque fois dans la zone d'extraction d'au moins un organe d'extraction (310), (320).

16. Dispositif selon la revendication 15, **caractérisé en ce que** le produit en feuilles dans la zone d'extraction des premiers parcours partiels (110), (120) supérieur et inférieur, est transporté dans la même direction.

17. Dispositif selon la revendication 15, **caractérisé en ce que** le produit en feuilles dans la zone d'extraction des premiers parcours partiels (110), (120) supérieur
et inférieur, est transporté dans la direction opposée.

18. Dispositif selon l'une des revendications 15 à 17, **caractérisé en ce que** les premiers parcours partiels (110), (120) présentent la même longueur.

19. Dispositif selon la revendication 15, **caractérisé en ce que** le deuxième parcours de transport (200) comporte des deuxièmes parcours partiels supérieur et inférieur (210), (220), au moyen desquels le produit en feuilles (10) est extrait par l'organe d'extraction (310), (320) dans la zone d'extraction du parcours partiel correspondant (110), (120) du premier parcours de transport (100), est transportée dans un deuxième parcours de transport commun (200).

20. Dispositif selon la revendication 15, **caractérisé en ce qu'**aussi bien le parcours partiel supérieur (110), qu'également le parcours partiel inférieur (120), comportent des organes d'extraction respectifs (310), (320), (330), (340) de droite et de gauche qui extraient le produit en feuilles soit vers la gauche soit vers la droite, à angle droit par rapport à la zone d'extraction.

21. Dispositif selon la revendication 20, **caractérisé en ce que** le deuxième parcours de transport (200) comporte des deuxièmes parcours partiels (210), (220), (230), (240) respectivement, supérieur de droite, supérieur de gauche, inférieur de droite, inférieur de gauche, au moyen desquels le produit en feuilles (10) extrait par l'organe d'extraction (310), (320), (330), (340), de droite ou de gauche dans la zone d'extraction du parcours partiel correspondant (110), (120) du premier parcours de transport (100), est transporté dans un deuxième parcours de transport (200) commun.

22. Dispositif selon l'une des revendications 15 à 21, **caractérisé en ce que** les deuxièmes parcours correspondants (210), (220), (230), (240), (250), (260), présentent chacun la même longueur.

23. Dispositif selon l'une des revendications 15 à 21, **caractérisé en ce qu'**est prévue une commande, qui commande et coordonne les organes d'extraction (310), (320, (330), (340) et l'instant d'extraction dans les organes d'extraction correspondants (310), (320), (330), (340).

24. Dispositif selon la revendication 23, **caractérisé en ce que** la commande pour la coordination des organes d'extraction (310), (320), (330), (340) et de l'instant d'extraction dans les organes d'extraction (310), (320), (330), (340) correspondants, évaluent la position du produit en feuilles 10 dans le premier parcours de transport (100).
